Europäisches Patentamt

European Patent Office

Office européen des brevets

(11) Publication number: **0 369 610**
**A1**

# EUROPEAN PATENT APPLICATION

(21) Application number: 89310657.5

(51) Int. Cl.⁵: **G11B 11/10**

(22) Date of filing: 17.10.89

(30) Priority: 17.10.88 JP 260777/88
17.10.88 JP 260778/88

(43) Date of publication of application:
**23.05.90 Bulletin 90/21**

(84) Designated Contracting States:
**AT BE CH DE ES FR GB GR IT LI LU NL SE**

(71) Applicant: **MITSUI PETROCHEMICAL
INDUSTRIES, LTD.
2-5, Kasumigaseki 3-chome Chiyoda-ku
Tokyo 100(JP)**

(72) Inventor: **Mizumoto, Kunihiko
c/o Mitsui Petrochem. Ind. Ltd., 3
Chigusa-Kaigan
Ichihara-shi Chiba(JP)**
Inventor: **Haruta, Koichi
c/o Mitsui Petrochem. Ind. Ltd., 3
Chigusa-Kaigan
Ichihara-shi Chiba(JP)**
Inventor: **Kajiura, Hirokazu
c/o Mitsui Petrochem. Ind. Ltd., 3
Chigusa-Kaigan
Ichihara-shi Chiba(JP)**

(74) Representative: **Myerscough, Philip Boyd et al
J.A.Kemp & Co. 14, South Square Gray's Inn
London, WC1R 5EU(GB)**

(54) **Magnetooptical recording media.**

(57) The invention provides a magnetooptical recording medium (1) comprising a substrate (2) bearing an enhancement film (3) and a magnetooptical recording film (4), said enhancement film (3) being composed of a silicon nitride $SiN_x$ (wherein $0<x<1.33$) and having a refractive index n of at least 1.9, and said magnetooptical recording film (4) being composed of an amorphous alloy $[Pd_aPt_{1-a}]_y[RE_xTM_{1-x}]_{1-y}$ (wherein at least 50 atom% of RE is Tb and/or Dy and any remainder is Nd, Gd, Ce, Eu, Pr, Ho, Tm or Sm, TM is Fe and/or Co, and $0≤a≤1$, $0.2<x<0.7$ and $0.05≤y≤0.3$) and having a magnetic easy axis perpendicular to the film. The magnetooptical recording medium may have a reflection film (5) on the magnetooptical recording film (4).

## FIG. 2

# MAGNETOOPTICAL RECORDING MEDIA

## FIELD OF THE INVENTION

This invention relates to magnetooptical recording media and more particularly to magnetooptical recording media having excellent oxidation resistance, capable of forming thereon a thin enhancement film, free from warpage in substrates thereof also free from delamination thereof, and excellent in productivity thereof.

## BACKGROUND OF THE INVENTION

It is known that amorphous films composed of alloys consisting of transition metals, such as terbium (Tb) and gadolinium (Gd), have a magnetic easy axis perpendicular to the film and are capable of forming a small inverse magnetic domain with magnetization anti-parallel to the magnetization of the film. By corresponding the existence or non-existence of this inverse magnetic domain to "1" or "0", it becomes possible to record a digital signal on such magnetooptical recording films as mentioned above.

As amorphous films composed of transition metals and rare earth elements which are used as magnetooptical recording media, there is disclosed an amorphous film of Tb-Fe alloy system containing 15-30 atom% of Tb, for example, in Japanese Patent Publication No. 20691/1982. These are also used, as magnetooptical recording media, amorphous alloy films prepared by incorporating a third component metal into those of Tb-Fe system. Furthermore, magnetooptical recording media of Tb-Co system, Tb-Fe-Co system and the like are also known.

Magnetooptical recording media composed of such amorphous alloy films as mentioned above were found to have excellent record reproducing characteristics. From a practical standpoint, however, these magnetooptical recording media, when actually used, had such a serious drawback that these amorphous alloy films undergo oxidation during their use and consequently their characteristics change with time.

The mechanism of oxidation deterioration of magnetooptical recording media composed of amorphous alloy films containing such transition metals and rare earth elements as mentioned above is discussed, for example, in Journal of Applied Magnetism Society of Japan, Vol. 9, No. 2, pp. 93-96, reporting that the oxidation deterioration may be classified into three types as mentioned below.

a) Hole corrosion

By hole corrosion is meant the occurrence of pinholes in the amorphous alloy films. This corrosion proceeds mainly under the circumstances of high humidity, and it markedly proceeds, for example, in the amorphous alloy films of Tb-Fe system or Tb-Co system.

b) Surface oxidation

An oxide layer is formed on the surface of amorphous alloy film, with the result that Kerr-rotation angle $\theta$k of the film changes with time and eventually comes to decrease.

c) Selective oxidation of rare earth metal

A rare earth metal present in the amorphous alloy film is selectively oxidized, with the result that coercive force Hc of the film comes to largely change with time.

Various attempts have heretofore been made to inhibit such oxidation deterioration of amorphous alloy films as mentioned above. For example, there have been proposed magnetooptical recording media having on the amorphous alloy film thereof an anti-oxidant protective layer composed of $Si_3N_4$, SiO, $SiO_2$, AlN or the like. The process proposed for preparing magnetooptical recording media as mentioned above, however, had such drawbacks that not only this antioxidant protective layer itself is expensive but also formation thereof requires much time and labor, and that this protective layer even when formed on the amorphous alloy film is not always effective in preventing said amorphous alloy film from its oxidation deterioration sufficiently.

For example, Journal of Applied Magnetism Society of Japan cited above discloses an attempt to improve the amorphous alloy film of Tb-Fe or Tb-Co system in oxidation resistance by incorporation into said film of such a third metal component as Co, Ni, Pt, Al, Cr or Ti in an amount of up to 3.5 atom%. In the cited Journal, it is reported that the incorporation into the amorphous alloy film of Tb-Fe or Tb-Co system of small amounts of Co, Ni or Pt is effective in inhibiting the aforementioned surface oxidation and hole corrosion of said alloy film but has no effect on inhibition of the aforementioned selective oxidation of Tb which is a rare earth metal present in said alloy film. This disclosure means that when small amounts of Co, Ni or Pt is added to the amorphous alloy film of Tb-Fe or Tb-Co system, Tb is selectively oxidized in the resulting alloy film and consequently coercive force Hc of said alloy film largely varies with time. From this, it follows that even when small amounts up to 3.5 atom% of Co, Ni or Pt are added to the amorphous alloy film of Tb-Fe or Tb-Co system, the resulting alloy film is not sufficiently improved in oxidation resistance.

Further, it is teaching of the Proceedings of the Ninth Conference of Applied Magnetism Society of Japan (November 1985) at page 209 that with the view of improving the amorphous alloy film of Tb-Fe or Tb-Fe-Co system in oxidation resistance, said alloy film is incorporated with Pt, Al, Cr or Ti in an amount of up to 10 atom%. However, even when Pt, Al, Cr or Ti was added in an amount of up to 10 atom% to the amorphous alloy film according to the above-mentioned teaching, resistance to selective oxidation of Tb present in the resulting alloy film was not sufficient, though the surface oxidation and hole corrosion could be inhibited to a fairly effective extent. Thus, there was still such a drawback that coercive force Hc of the amorphous alloy film obtained in this manner largely varies and eventually decreases to a great extent.

Still further, Japanese Patent L-O-P Publn. No. 7806/1983 discloses magnetic film materials composed of polycrystalline films having the composition of PtCo in which Pt is contained in an amount of 10-30 atom%.

However, because of polycrystalline structure of this polycrystalline film having such composition as PtCo, the film as formed required such heat treatment as annealing treatment, and there were such drawbacks that particle-particle boundaries among the crystals sometimes appear as noise signals, and that the polycrystalline film thus formed are high in Curie point.

In order to solve such problems as mentioned above, the present inventors proposed in Japanese Patent Application No. 94799/1987 amorphous alloy films with a magnetic easy axis perpendicular to the film, which are composed of (i) at least one member selected from among 3d transition metals such as Fe and Co, (ii) a corrosion-resistant metal such as Pt or Pd, and (iii) at least one member selected from among rare earth elements.

The present inventors found in this connection that in the magnetooptical recording media having formed a known enhancement film such as $Si_3N_4$ between a magnetooptical recording film composed of such amorphous alloy film excellent in oxidation resistance and capable of being reduced in film thickness thereof as mentioned above and a substrate for said magnetooptical recording media, there are such drawbacks that the enhancement film must have a film thickness of at least 850 A in order to obtain a sufficient enhancement effect and, on this account, warpage and delamination are apt to occur in the substrate and consequently said magnetooptical recording media become poor in productivity.

In light of the foregoing problems, the present inventors prosecuted extensive researches and eventually have accomplished the present invention on the basis of their finding that said problems can be solved at a stroke by forming between the substrate and magnetooptical recording medium the enhancement film composed of silicon nitride having a specific composition.

## OBJECT OF THE INVENTION

The present invention has been accomplished in light of the foregoing problems, and an object of the invention is to provide magnetooptical recording media which have magnetooptical recording films excellent in oxidation resistance and are also capable of forming therein a thin enhancement film, said magnetooptical recording media being free from warpage in the substrate and also free from delamination, and hence being high in productivity.

## SUMMARY OF THE INVENTION

3

The magnetooptical recording media of the present invention, which have a substrate and thereon at least an enhancement film (I) and a magnetooptical recording film (II), are characterized in that said enhancement film (I) is composed of a film of silicon nitride represented by $SiN_x$ (wherein $0<x<1.33$) with a refractive index of at least 1.9, and said magnetooptical recording film (II) is composed of an amorphous alloy film represented by $[Pd_aPt_{1-a}]_y[RE_xTM_{1-x}]_{1-y}$ (wherein at least 50 atom% of RE is Tb and/or Dy, and the remainder is Nd, Gd, Ce, Eu, Pr, Ho, Tm or Sm, TM is Fe and/or Co, $0 \leq a \leq 1$, $0.2<x<0.7$ and $0.05 \leq y \leq 0.3$) with a magnetic easy axis perpendicular to the film.

The magnetooptical recording media of the invention have on the substrate thereof at least (I) the enhancement film and (II) the magnetooptical recording film as aforesaid, and this enhancement film (I) is composed of silicon nitride having a specific composition and this magnetooptical recording film has also specific composition. Thus, the magnetooptical recording media of the invention capable of having a magnetooptical recording film excellent in oxidation resistance and an enhancement film that can be made thinner in film thickness will not undergo warpage in the substrate and also delamination, and consequently said magnetooptical recording media are excellent in productivity.


## BREIF DESCRIPTION OF THE DRAWINGS


Figs. 1 and 2 show cross-sectional views of magnetooptical recording media of the present invention.

Fig. 3 shows variation in coercive force of ($Pt_{20}Tb_{35}Fe_{25}Co_{20}$) of the present invention and those of $Tb_{25}Co_{75}$ and $Tb_{25}Fe_{66}Co_9$ of the comparative examples.

1 ... Magnetooptical recording medium
2 ... Substrate
3 ... Enhancement film
4 ... Magnetooptical recording film
5 ... Reflection film


## DETAILED DESCRIPTION OF THE INVENTION


The magnetooptical recording media of the present invention are illustrated below in detail.

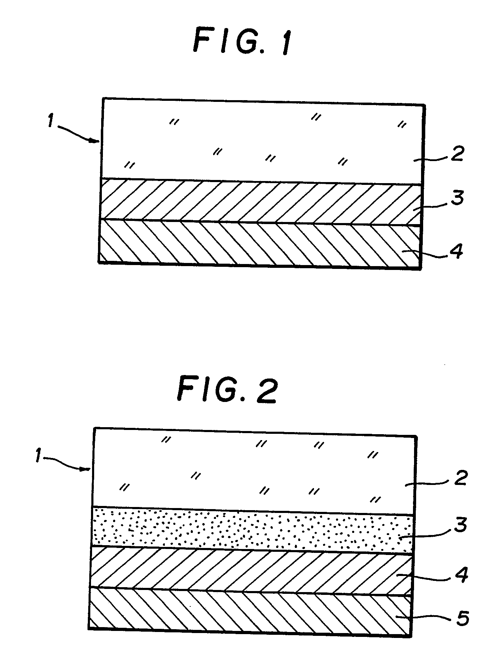

As shown in Fig. 1, a magnetooptical recording medium 1 of the present invention has a structure wherein an enhancement film 3 and a magnetooptical recording film 4 are laminated in that order to a substrate 2 such as a transparent substrate.

Further, the magnetooptical recording medium 1 of the invention as illustrated in Fig. 1 may have a reflection film 5 laminated to the magnetooptical recording film 4 as shown in Fig. 2.

The substrate 2 is preferably a transparent substrate which includes, in concrete, those made of inorganic materials such as glass, aluminum, etc., or those made of organic materials such as polymethyl methacrylate, polycarbonate, polymer alloy of polycarbonate with polystyrene, such amorphous polyolefin as disclosed in U.S. Patent No. 4,614,778, poly-4-methyl-1-pentene, epoxy resin, polyether sulfone, polysulfone, polyether imide, ethylene/tetracyclododecene copolymer, etc.

The enhancement film 3 is provided on the substrate 2 as illustrated above.

This enhancement film has a composition represented by $SiN_x$ (wherein $0<x<1.33$, preferably $0.5<x<1.33$ and especially $0.7<x<1.3$) and a refractive index n of at least 1.9, preferably from 2.0 to 3.6, further preferably from 2.1 to 3.0 and especially from 2.2 to 2.7. The x value may be determined by an ESCA measurement. If the enhancement film 3 used has a refractive index n of at least 1.9, this film can be made thinner, with the result that no warpage or delamination in the substrate occurs and, at the same time, the magnetooptical recording medium having such enhancement film improves in its productivity.

The enhancement film 3 as mentioned above desirably has a film thickness of less than 800 Å, preferably less than 700 Å, further preferably less than 650 Å and especially from 300 to 650 Å.

This enhancement film 3 may be formed on the substrate 2 by sputtering simultaneously both $Si_3N_4$ and Si used as targets.

The magnetooptical recording medium 1 of the present invention has the enhancement film having the above-mentioned composition represented by $SiN_x$ ($0<x<1.33$) and a refractive index of at least 1.9, and this enhancement film can be formed as a thinner film. On that account, the magnetooptical recording

4

medium is free from warpage or delamination in the substrate and accordingly is also excellent in productivity.

The magnetooptical recording medium 1 of the present invention has on the enhancement film 3 as mentioned above the magnetooptical recording film 4 having a magnetic easy axis perpendicular to the film.

This magnetooptical recording film 4 is represented by the formula

$$[Pd_aPt_{1-a}]_y[RE_xTM_{1-x}]_{1-y} \quad [I]$$

wherein at least 50 atom% of RE is Tb and/or Dy and the remainder is Nd, Gd, Ce, Eu, Pr, Ho or Sm, TM is Fe and/or Co, $0 \leq a \leq 1$, $0.2 < x < 0.7$, and $0.05 \leq y \leq 0.3$.

Further, particularly preferred magnetooptical recording film having a magnetic easy axis perpendicular to the film used in the present invention is a magnetooptical recording film of the above mentioned formula [I] wherein $0.25 < x < 0.6$ and at least 80 atom%, preferably at least 90 atom% of RE is Tb and the remainder is Dy, Nd, Gd, Ce, Eu, Pr, Ho or Sm.

The preferred magnetooptical recording film as mentioned above is illustrated below in detail.

(i) In the above formula [I], TM includes Fe or Co or both. In the magnetooptical recording film represented by the above-mentioned formula [I], TM is present in an amount represented by 1-x (wherein $0.2 < x < 0.7$, preferably $0.25 < x < 0.6$).

TM preferably includes both Fe and Co, and TM particularly includes Fe in an amount of 100-35 atom% and Co in an amount of 0-65 atom%. Further preferably, Fe is present in an amount of 100-70 atom% and Co is present in an amount of 0-30 atom%.

TM may also include less than 5 atom%, preferably less than 3 atom% of Ni.

(ii) The magnetooptical recording film contains Pd or Pt or both. In the magnetooptical recording film, Pt or Pd or both are present in an amount of 5-30 atom%, preferably 10-30 atom%.

When the proportions of Pd and Pt are represented by $Pd_aPt_{1-a}$ ($0 \leq a \leq 1$), if the proportion of Pd is $0.2 < a \leq 1$, there is obtained a magnetooptical recording film excellent from an economic standpoint.

When the content of Pd or Pt or both in the magnetooptical recording film is 5-30 atom%, particularly 10-30 atom%, there are obtained such advantages that the resulting magnetooptical recording film is excellent in oxidation resistance, coercive force Hc does not vary largely with time, and a sufficiently high C/N ratio is obtained in a small bias magnetic field.

(iii) The magnetooptical recording film used in the present invention contains at least one rare earth element (RE) in addition to the above-mentioned (i) and (ii).

At least 50 atom% of RE is Tb and/or Dy and the remainder is Nd, Gd, Ce, Eu, Pr, Ho or Sm. Preferably at least 80 atom% of RE is Tb and the remainder is Dy, Nd, Gd, Ce, Eu, Pr, Ho or Sm. Further preferably at least 90 atom%, particularly at least 95 atom% of RE is Tb and the remainder is Dy, Nd, Ce, Eu, Pr, Ho or Sm.

In the magnetooptical recording film represented by the above-mentioned formula [I], the above-mentioned rare earth element RE is present in an amount of $0.2 < x < 0.7$, preferably $0.25 < x < 0.6$.

In the magnetooptical recording film mentioned above, the film thickness thereof is 200-5000 Å, preferably about 200-3000 Å, and a value of x is larger than 0.2, preferably larger than 0.25 and less than 0.6 in order that Kerr hysteresis exhibits favorable square-shape and a coercive force of at least 1 KOe is obtained.

The magnetooptical recording films having such composition as mentioned above may be confirmed by VSM measurement or the like that they have a magnetic easy axis perpendicular to the film and mostly they are capable of being magnetovertically and magnetooptically recorded, the Kerr hysteresis loop of which exhibit favorable square-shape.

In the above cases, if the value of x is smaller than 0.2 or larger than 0.7, there is a tendency that the Kerr hysteresis loop will not exhibit favorable square shape.

In the present specification, by the expression "Kerr hysteresis loop exhibits favorable square-shape", it is meant that a ratio $\theta k_2/\theta k_1$ of the Kerr-rotation angle at the remnant magnetization ($\theta k_2$) in the external magnetic filed of zero to the Kerr-rotation angle at a saturation magnetization ($\theta k_1$) in the maximum external magnetic field is more than 0.8.

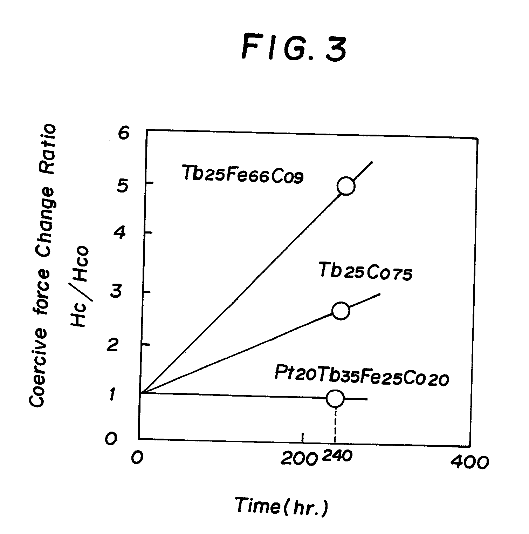

The above-mentioned magnetooptical recording films used in the present invention have excellent oxidation resistance and, as shown in Fig. 3, said film having the composition $Pt_{20}Tb_{35}Fe_{25}Co_{20}$ does not practically vary in coercive force even when it is stored for more than 240 hours under a certain environment, for example, at 85° C and 85% RH. Similarly, no practical variation in coercive force is observed in the magnetooptical recording film having the composition $Pd_{10}Pt_{10}Tb_{35}Fe_{25}Co_{20}$ even when said film is stored for more than 240 hours under the same environment as above. In contrast thereto, the magnetooptical recording film having the composition $Tb_{25}Co_{75}$ or $Tb_{25}Fe_{66}Co_9$ containing no Pd or Pt or both largely varies in coercive force with time when it is stored under the same environment as above.

When the above-mentioned environmental test is further continued for 1000 hours, the coercive force of the systems containing Pd or Pt or both does not practically varies, as well. From the foregoing, it is understood that the systems containing Pd or Pt or both will inhibit selective oxidation of rare earth element contained therein.

From the fact that variation of $\theta k$ is small in the magnetooptical recording films of the present invention after the environmental test, it is understood that surface oxidation of said films is inhibited. It is also understood from microscopic observation of the film surface that hole corrosion in said film surface is inhibited.

As explained hereinbefore, the magnetooptical recording films used in the present invention have such excellent charaoteristics that they are markedly excellent in oxidation resistance and accordingly the provision on said films of an antioxidant protective film is not always necessary when the magnetooptical recording films are actually used.

Another characteristic feature of the magnetooptical recording films used in the present invention is that they are high in reflectance R. Generally, when magnetooptical recording films are used in magnetooptical recording, there is no need for giving consideration to medium noise due to crystal-crystal boundaries, but shot noise of an optical detector comes into question. In this case, because of the relationship of $C/N \propto R\theta k$, C/N may be improved by improving a value of either one of R and $\theta k$.

Accordingly, the magnetooptical recording films used in the present invention, which are high in R, have an advantage that C/N in magnetooptical recording is improved.

In the magnetooptical recording films used in the invention as illustrated hereinbefore, it may be designed to improve Curie temperature, compensation temperature, Ho or $\theta k$, or reduce costs of production by the addition thereto of various other elements. These elements may be used in an amount, for example, of less than 50 atom% based on the rare earth element.

Examples of other elements which can be used in combination are as follows:

(I) 3d transition elements other than Fe and Co

Concretely, Sc, Ti, V, Cr, Mn, Ni, Cu and Zn may be used.

Of these elements, preferred are Ti, Ni, Cu and Zn.

(II) 4d transition elements

Concretely, Y, Zr, Nb, Mo, Tc, Ru, Rh, Ag and Cd may be used.

Of these elements, preferred are Zr and Nb.

(III) 5d transition elements other than Pt

Concretely, Hf, Ta, W, Re, Os, Ir, Au and Hg may be used.

Of these elements, preferred is Ta.

(IV) III B Group elements

Concretely, B, Al, Ga, In and Tl may be used.

Of these elements, preferred are B, Al and Ga.

(V) IV B Group elements

Concretely, C, Si, Ge, Sn and Pb may be used.

Of these elements, preferred are Si, Ge, Sn and Pb.

(VI) V B Group elements

Concretely, N, P, As, Sb and Bi may be used.

Of these elements, preferred is Sb.

(VII) VI B Group elements

Concretely, S, Se, Te and Po may be used.

Of these elements, preferred is Te.

In the magnetooptical recording medium 1, a reflection film 5 may be provided on the above-mentioned magnetooptical recording film 4.

This reflection film 5 is preferably composed of nickel alloy, iron alloy, copper alloy, lead alloy or stainless steel alloy having a reflectance of at least 50%, preferably at least 70% and a thermal conductivity of less than 2 J/cm$\cdot$sec$\cdot$K, preferably less than 1 J/cm$\cdot$sec$\cdot$K.


(a) Nickel alloy


Nickel alloy contains nickel as a principal component and at least one member selected from the group consisting of silicon, molybdenum, iron, chromium and copper. In the nickel alloy as mentioned above, nickel is contained in an amount of 30-99 atom%, preferably 50-90 atom%, preferably 50-90 atom%.

Nickel alloys used for constituting the above-mentioned reflection film include concretely those as

6

enumerated below.

Ni-Si alloy (85 atom% Ni, 10 atom% Si, 3 atom% Cu, 2 atom% Al)

Ni-Cu alloy (63 atom% Ni, 29-30 atom% Cu, 0.9-2 atom% Fe, 0.1-4 atom% Si, 0-2.75 atom% Al)

Ni-Mo-Fe alloy (60-65 atom% Ni, 25-35 atom% Mo, 5 atom% Fe)

Ni-Mo-Fe-Cr alloy (55-60 atom% Ni, 15-20 atom% Mo, 6 atom% Fe, 12-16 atom% Cr, 5 atom% W)

Ni-Mo-Fe-Cr-Cu alloy (60 atom% Ni, 5 atom% Mo, 8 atom% Fe, 21 atom% Cr, 3 atom% Cu, 1 atom% Si, 1 atom% Mn, 1 atom% W, or 44-47 atom% Ni, 5.5-7.5 atom% Mo, 21-23 atom% Cr, 0.15 atom% Cu, 1 atom% Si, 1-2 atom% Mn, 2.5 atom% Co, 1 atom% W, 1.7-2.5 atom% Nb, the remainder Fe)

Ni-Cr-Cu-Mo alloy (56-57 atom% Ni, 23-24 atom% Cr, 8 atom% Cu, 4 atom% Mo, 2 atom% W, 1 atom% Si or Mn)

Ni-Cr-Fe alloy (79.5 atom% Ni, 13 atom% Cu, 6.5 atom% Fe, 0.2 atom% Cu, or 30-34 atom% Ni, 19-22 atom% Cr, 0.5 atom%, Cu, 1 atom% Si, 1.5 atom% Mn, the remainder Fe)

(b) Iron alloy

Iron alloy contains iron as a principal component and at least one member selected from the group consisting of copper, chromium, molybdenum, silicon and nickel.

The iron alloy used for constituting the reflection film includes concretely those as enumerated below.

Fe-Cr-Ni alloy (19-20 atom% Cr, 22-24 atom% Ni, 2-3 atom% Mo, 1-1.75 atom% Cu, 1-3.25 atom% Si, 0.07 atom% C, the remainder Fe, or 20 atom% Cr, 29 atom% Ni, 2 atom% Mo, 4 atom% Cu, 1 atom% Si, 0.07 atom% C, the remainder Fe, or 25 atom% Cr, 35 atom% Ni, 5 atom% Mo, 0.2-0.5 atom% C, the remainder Fe)

Fe-Cr alloy (4-10 atom% Cr, 0.5-1.5 atom% Mo, the remainder Fe)

(c) Copper alloy

Copper alloy contains copper as a principal component and at least one member selected from the group consisting of aluminum, silicon, tin, zinc and nickel.

The copper alloy used for constituting the reflection film includes concretely those as enumerated below.

Cu-Al alloy (8.5-11 atom% Al, 0-4 atom% Fe, the remainder Cu)

Cu-Si alloy (1-4 atom% Si, 0-1 atom% Mn, 0-1.75 atom% Sn, 0.1 atom% Zn, the remainder Cu)

Cu-Sn alloy (4-12 atom% Sn, less than 0.25 atom% of Pb or Zn, the remainder Cu)

Cu-Sn-Zn alloy (less than 20 atom% of Sn, less than 17 atom% of Zn (Zn<Sn), small amount of Pb, the remainder Cu)

Cu-Zn alloy (less than 17 atom% of Zn, the remainder Cu)

Cu-Ni alloy (80 atom% Cu, 20 atom% Ni, or 75 atom% Cu, 20 atom% Ni, 5 atom% Zn, or 70 atom% Cu, 30 atom% Ni)

(d) Lead alloy

Lead alloy contains lead as a principal component and at least one member selected from the group consisting of copper, bismuth, tellurium and tin.

The lead alloy used for constituting the reflection film includes concretely those as enumerated below.

Pb-Cu-Bi-Te alloy (99.85 atom% Pb, up to 0.085 atom% Cu, up to 0.005 atom% Bi, 0.05 atom% Te)

Pb-Cu-Bi alloy (99 atom% Pb, up to 0.08 atom% Cu, up to 0.005 atom% Bi)

Pb-Sn alloy (4-10 atom% Sn, the remainder Pb)

(e) Stainless steel alloy

Stainless steel alloy contains iron as a principal component and at least one member selected from the group consisting of chromium, nickel, molybdenum and carbon.

The stainless steel alloy used for constituting the reflection film includes concretely those as enumerated below.

(i) Cr : 16-20 atom%,

Ni : 10-16 atom%,

Mo : 2-4 atom%,

C : 0.1 atom%, the remainder Fe

(ii) Cr : 10-16 atom%,

Ni : 17-19 atom%,

Mo : 1.2-2.75 atom%,

Cu : 1.0-2.5 atom%,

C : 0.08 atom%, the remainder Fe

(iii) Cr : 22-24 atom%,

Ni : 12-15 atom%,

C : 0.1 atom%, the remainder Fe

(iv) Cr : 24-26 atom%,

Ni : 19-22 atom%,

C : 0.1 atom%, the remainder Fe

The magnetooptical recording media of the present invention having the reflection film 5 composed of the nickel alloy as defined above have excellent C/N ratio in comparison with the magnetooptical recording media having a reflection film composed of aluminum or gold.

The reflection film 5 as mentioned above has a film thickness of 100-4000 Å, preferably 200-2000 Å.

In the present invention, the magnetooptical recording media having formed on the magnetooptical recording film such reflection film as mentioned above have excellent characteristics and hence the provision of an enhancement film between the substrate and magnetooptical recording film is not always necessary.

The magnetooptical recording media of the present invention are illustrated below with reference to a process by which they are produced.

Magnetooptical recording media may be produced by the process which comprises maintaining temperature of the substrate at about room temperature, depositing an amorphous alloy film having the predetermined composition on the substrate (it may be fixed to or may rotate) by the known film depositing method such as sputtering, electron beam evaporation or the like method using a composite target with chips of elements constituting the amorphous alloy film arranged in the predetermined proportion or an alloy target having the predetermined composition, and then depositing a reflection film by the same procedure as above on the amorphous alloy film as formed.

In the process for producing the magnetooptical recording media of the present invention as illustrated above, all the desired films, such as the amorphous alloy film and reflection film, can be formed at ordinary temperatures, and hence there is no need for heat treatment such as annealing treatment in order to impart to the amorphous alloy film a magnetic easy axis perpendicular to the film after formation of said amorphous alloy film.

If necessary, it is also possible to form the amorphous alloy film on the substrate while heating said substrate to 50-600 °C or cooling it up to -50 °C.

At the time of sputtering, a negative bias voltage can be applied to the substrate so that said substrate has negative potential. When the substrate is treated in this manner, accelerated ions of inert gas such as argon come to hit not only a target substance but also a film with a magnetization with easy axis perpendicular to the film being formed, and hence there may be obtained sometimes the film with a magnetization with easy axis perpendicular to the film having excellent characteristics.


## EFFECT OF THE INVENTION


The magnetooptical recording media of the present invention have on a substrate at least (I) an enhancement film and (II) a magnetooptical recording film, said enhancement film (I) being composed of silicon nitride having a specific composition and said magnetooptical recording film (II) having a specific composition. Thus, the present magnetooptical recording media have the magnetooptical recording film excellent in oxidation resistance and also are capable of forming the enhancement film of small thickness, in which no warpage occurs in the substrate and no delamination occurs, and therefore the magnetooptical recording media are excellent in productivity.

The present invention is illustrated below with reference to example, but it should be construed that the invention is in no way limited to those example.

Example 1

On a disc substrate made of an ethylene/tetracyclododecene copolymer (ethylene content 60 mol%, tetracyclododecene content 40 mol%), were successively laminated by sputtering method $SiN_x$ (1.0<x<1.3, refractive index n = 2.3, k (coefficient of demagnitization) = 0.014) of 700 Å as an enhancement layer, $Pt_{18}Tb_{34}Fe_{38}Co_{10}$ of 300 Å as a magnetooptical recording layer and $Ni_{80}Cr_{20}$ of 700 Å as a reflection layer, whereby a magnetooptical disc was produced. The x value was determined by an ESCA measurement.

Record reproducing characteristics of this disc were evaluated at a recording frequency of 1 MHz (duty ratio 50%) and a linear speed of 5.4 m/s.

As a result, the optimum recording laser power was 3.5 mW and C/N was 50 dB (reproduction laser power 1.0 mW). Further, the disc was allowed to stand for 2000 hours under the circumstances of high temperature of 80° C and humidity of 85%, whereupon a rate of variation in C/N of ΔC/N was zero.

Examples 2-7

Following substantially the same procedure as described in Example 1, magnetooptical recording discs were produced by successively laminating on a substrate $SiN_x$ (1.0<x<1.3, refractive index n = 2.3, k (coefficient of demagnetization) = 0.014) of 700 Å as an enhancement layer, and magnetooptical recording layers and reflection layers having the compositions and structures as indicated in Table 1, followed by evaluation in the same manner as in Example 1.

Results obtained are shown in Table 1.

Table 1

| | Magnetooptical recording layer | Reflection layer | Optimum recording power | C/N | ΔC/N |
|---|---|---|---|---|---|
| Example 2 | $Pt_{15}Tb_{30}Fe_{49}Co_8$ 300 Å | $Ni_{85}Cr_{15}$ 800 Å | 4.0 mW | 50 dB | 0 dB |
| Example 3 | $Pt_8Tb_{28}Fe_{53}Co_{11}$ 400 Å | $Ni_{80}Cr_{20}$ 1200 Å | 5.3 mW | 49 dB | 0 dB |
| Example 4 | $Pt_{20}Tb_{35}Fe_{25}Co_{20}$ 200 Å | $Ni_{64}Cu_{36}$ 200 Å | 2.8 mW | 48 dB | 0 dB |
| Example 5 | $Pd_6Pt_6Tb_{30}Fe_{48}Co_{10}$ 500 Å | $Ni_{90}Cr_{10}$ 400 Å | 3.8 mW | 48 dB | 0 dB |
| Example 6 | $Pd_{15}Pt_{10}Tb_{36}Fe_{26}Co_{13}$ 250 Å | $Ni_{80}Cr_{20}$ 1500 Å | 6.2 mW | 49 dB | 0 dB |
| Example 7 | $Pd_7Tb_{28}Fe_{54}Co_{11}$ 200 Å | $Ni_{72}Cu_{28}$ 1800 Å | 7.2 mW | 50 dB | 0 dB |

Examples 8-14

Example 1 was repeated to obtain magnetooptical recording discs, except that the magnetooptical recording layers used were those having the compositions and film thicknesses as indicated in Table 2 and the reflection layers used were those having the compositions and film thicknesses as indicated in Table 2, followed by evaluation in the same manner as in Example 1.

Results obtained are shown in Table 2.

Table 2

| | Magnetooptical recording layer | Reflection layer | Optimum recording power | C / N |
|---|---|---|---|---|
| Example 8 | $Pd_{10}Pt_8Tb_{34}Fe_{38}Co_{10}$ 300 Å | $Ni_{80}Cr_{20}$ 700 Å | 3.5 mW | 50 dB |
| Example 9 | $Pd_5Pt_{10}Tb_{30}Fe_{49}Co_8$ 300 Å | $Cu_{90}Si_{10}$ 600 Å | 4.2 mW | 51 dB |
| Example 10 | $Pd_4Pt_4Tb_{28}Fe_{53}Co_{11}$ 400 Å | $Fe_{68}Cr_{18}Ni_{24}$ 1200 Å | 5.2 mW | 49 dB |
| Example 11 | $Pd_{10}Pt_{10}Tb_{35}Fe_{25}Co_{20}$ 200 Å | $Pb_{95}Sn_5$ 300 Å | 2.7 mW | 47 dB |
| Example 12 | $Pd_8Pt_4Tb_{30}Fe_{48}Co_{10}$ 500 Å | $Fe_{66}Cr_{18}Ni_{14}Mo_2$ 400 Å | 3.5 mW | 48 dB |
| Example 13 | $Pd_{10}Pt_{15}Tb_{36}Fe_{26}Co_{13}$ 250 Å | $Cu_{85}Zn_{15}$ 1000 Å | 5.8 mW | 50 dB |
| Example 14 | $Pd_7Tb_{28}Fe_{54}Co_{11}$ 200 Å | $Ni_{72}Cu_{28}$ 1800 Å | 7.2 mW | 50 dB |

## Claims

1. A magnetooptical recording medium comprising a substrate bearing an enhancement film (I) and a magnetooptical recording film (II), wherein the enhancement film (I) is composed of a silicon nitride $SiN_x$ - (wherein $0<x<1.33$) and has a refractive index n of at least 1.9, and the magnetooptical recording film (II) is composed of an amorphous alloy $[Pd_aPt_{1-a}]_y[RE_xTM_{1-x}]_{1-y}$ (wherein at least 50 atom% of RE is Tb and/or Dy and any remainder is Nd, Gd, Ce, Eu, Pr, Ho, Tm or Sm, TM is Fe and/or Co, and $0\leq a\leq 1$, $0.2<x<0.7$ and $0.05\leq y\leq 0.3$) and has a magnetic easy axis perpendicular to the film.

2. A magnetooptical recording medium according to claim 1 wherein the enhancement film (I) has a refractive index n of 2.1-3.0 and is composed of a silicon nitride $SiN_x$ wherein $0.7<x<1.3$.

3. A magnetooptical recording medium according to claim 1 or 2 wherein the enhancement film (I) is less than 80 nm (800Å) thick.

4. A magnetooptical recording medium according to any one of the preceding claims wherein a reflection film is provided on the magnetooptical recording film (II).

5. A magnetooptical recording medium according to claim 4 wherein the reflection film has a reflectance of at least 50% and a thermal conductivity of less than 2 J/cm.sec.k.

6. A magnetooptical recording medium according to claim 4 or 5 wherein the reflection film is composed of;

(a) an iron alloy containing iron as the principal component and at least one of copper, chromium, molybdenum, silicon and nickel;

(b) a copper alloy containing copper as the principal component and at least one of aluminum, silicon, tin, zinc and nickel;

(c) a lead alloy containing lead as the principal component and at least one of copper, bismuth, tellurium and tin; or

(d) a stainless steel alloy.

# FIG. 1

# FIG. 2

# FIG. 3

Coercive force Change Ratio $Hc/Hco$

$Tb_{25}Fe_{66}Co_{9}$

$Tb_{25}Co_{75}$

$Pt_{20}Tb_{35}Fe_{25}Co_{20}$

Time(hr.)

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | PATENT ABSTRACTS OF JAPAN vol. 8, no. 202 (P-300)(1639), 14 September 1984; & JP - A - 59 84 358 (SEIKO) 16.05.1984 --- | 1 | G 11 B 11/10 |
| A | EP-A-0 139 474 (SHARP) * claims 1,5,8-11; figures 1,2 * --- | 1 | |
| A,P | PATENT ABSTRACTS OF JAPAN vol. 13, no. 1, (P-808)(3349), 6 January 1989; & JP - A - 63 211 142 (HITACHI) 02.09.1988 ----- | 1 | |
| | | | TECHNICAL FIELDS SEARCHED (Int. Cl.5) |
| | | | G 11 B 11/00 G 11 B 13/00 G 11 B 7/00 H 01 F 10/00 |

The present search report has been drawn up for all claims

| Place of search | Date of completion of the search | Examiner |
|---|---|---|
| BERLIN | 29-12-1989 | BERNAS Y.N.E. |

EPO FORM 1503 03.82 (P0401)